# FASCICULE DE BREVET EUROPEEN

(11) **EP 0 652 388 B1**
(45) Date de publication et mention de la délivrance du brevet: **23.07.1997**
(21) Numéro de dépôt: 94402438.9
(22) Date de dépôt: 27.10.1994
(51) Int. Cl.: F16F 7/12, B60R 19/34, B62D 21/15, E01F 15/00

(54) **Dispositif absorbeur de choc**
Stossdämpfer
Shock absorbing device

(30) Priorité: 10.11.1993 FR 9313695
(43) Date de publication de la demande: 10.05.1995
(73) Titulaire: AUTOMOBILES PEUGEOT, 75116 Paris (FR); AUTOMOBILES CITROEN, 92200 Neuilly-sur-Seine (FR)
(72) Inventeur: Faidy, Jean-Pierre, F-92410 Ville d'Avray (FR)
(74) Mandataire: Robert, Jean-François

(56) Documents cités:
- EP-A- 0 390 381
- EP-A- 0 517 377
- DE-B- 1 750 992
- US-A- 2 135 749

## Description

La présente invention concerne un dispositif absorbeur de choc, et plus particulièrement un dispositif destiné à être placé à l'avant d'un véhicule, routier ou ferroviaire, par exemple à l'avant d'une voiture de tourisme.

Le rôle de ce dispositif est d'absorber et de consommer, par sa déformation propre, tout ou partie de l'énergie cinétique du véhicule en cas de collision frontale de celui-ci.

L'objectif de l'invention est de proposer un dispositif qui puisse absorber un maximum d'énergie tout en étant d'un prix de revient faible, facile à fabriquer, et robuste et fiable au fonctionnement.

La robustesse du fonctionnement implique notamment l'aptitude que doit avoir le dispositif à garder une capacité élevée d'absorption de l'énergie cinétique, même pour des collisions dont la direction n'est pas axiale par rapport au véhicule. Cette configuration de choc est en particulier caractéristique des accidents routiers où les collisions frontales se situent pour majorité dans un éventail d'angles compris entre -30° et +30° par rapport à l'axe de chaque véhicule.

Les contraintes de prix de revient et de facilité de fabrication excluent des dispositifs qui utilisent des matériaux ayant une bonne capacité d'absorption d'énergie en s'écrasant, tels que les structures en aluminium à nid d'abeilles, ainsi que des mécanismes compliqués ayant un nombre de pièces élevé, par exemple des systèmes hydrauliques à piston mobile.

L'objectif visé est atteint, conformément à la présente invention, grâce à un dispositif selon la revendication 1.

Il convient de noter que le document US-A-2 135 749 décrit un dispositif absorbeur de choc comprenant plusieurs éléments coaxiaux.

Chacun des éléments a une forme générale annulaire, et sa paroi est constituée d'un ensemble de manchons tronconiques emboîtés coaxialement les uns dans les autres. La conicité des manchons est faible.

Lors d'un choc, les manchons constitutifs de chaque élément annulaire vont avoir tendance à s'enfoncer plus profondément les uns dans les autres en provoquant une déformation radiale des parois, voire un éclatement de celles-ci.

Ce dispositif connu nécessite la mise en oeuvre d'un très grand nombre de pièces et est d'une complexité de fabrication qui ne correspond pas à l'objectif visé.

De plus, de par sa conception, il est nécessairement d'un encombrement élevé en direction axiale, ce qui le rend difficilement adaptable sur des véhicules légers modernes.

De préférence, l'élément extérieur constitutif de l'empilement formant le dispositif de la présente invention s'évase dans le sens du choc envisagé. Par conséquent, dans le cas où le dispositif est monté à l'avant d'un véhicule, son extrémité évasée est dirigée vers l'arrière.

Par ailleurs, selon un certain nombre de caractéristiques additionnelles, non limitatives, de la présente invention :
- l'empilement des éléments de paroi est pourvu à l'une au moins de ses extrémités d'une plaque de fermeture ;
- l'ensemble des éléments de paroi constitue une pièce monobloc ; celle-ci peut être obtenue par exemple par emboutissage d'une tôle unique ou par moulage d'une matière plastique ou d'un matériau composite ;
- les différents éléments de paroi sont fixés les uns aux autres au niveau de leur bord en appui mutuel, cette fixation se faisant par collage ou soudage ;
- l'ensemble des éléments de paroi ont la même longueur ;
- tous les éléments de paroi n'ont pas la même longueur ;
- le dispositif est pourvu de cales de maintien de l'empilement ;
- le dispositif contient un matériau de remplissage, ce matériau pouvant occuper l'espace intérieur de certains seulement ou de l'ensemble des éléments de paroi ;
- l'un au moins des éléments de paroi comporte des moyens de contrôle de sa déformation, par exemple des ouvertures ;
- les éléments de paroi ont une forme tronconique ;
- l'ensemble des éléments de paroi possède la même conicité ;
- dans le cas d'une application automobile, l'angle au sommet des éléments de paroi est compris entre 10 et 60 degrés, de préférence entre 10 et 30 degrés.

Lorsque les éléments de paroi sont des troncs de cône ayant tous la même conicité, le dispositif est avantageusement réalisé à partir d'un tube unique tronconique qui est découpé en tronçons ; chacun des tronçons constitue alors un élément de paroi.

D'autres caractéristiques et avantages de l'invention apparaîtront de la description et des dessins annexés, qui en représentent des modes de réalisation préférentiels.

Sur ces dessins :
- la figure 1 est une vue en perspective d'un premier mode de réalisation possible du dispositif ;
- la figure 2 représente le dispositif de la figure 1 en coupe axiale ;
- la figure 3 est une vue schématique en perspective de la partie avant de la caisse d'un véhicule automobile recevant deux dispositifs conformes à l'invention ;
- les figures 4, 5 et 6 sont des schémas destinés à illustrer la manière dont la force d'impact se répartit au sein des éléments de paroi dans trois cas différents de configuration du choc ;
- la figure 7 est une vue schématique d'un dispositif formé d'éléments de paroi possèdant des longueurs différentes ;
- la figure 8 est une courbe représentant la décélération en fonction du temps lorsque le dispositif de la figure 7 est soumis à un choc ;
- les figures 9 à 12 sont des schémas similaires à celui de la figure 7, montrant des variantes du dispositif ;
- les figures 13 et 14 sont des vues schématiques montrant comment il est possible de fabriquer un dispositif à partir d'un tube tronconique unique ;
- la figure 15 est une vue en coupe axiale d'un dispositif formé d'éléments de paroi soudés les uns aux autres, le dispositif étant équipé en outre de deux plaques de fermeture d'extrémité ;
- la figure 16 montre, également en coupe axiale, un dispositif dans lequel l'emboîtement des éléments de paroi est assuré par des cales ;
- les figures 17 et 18 représentent, respectivement vu de face et vu de dessus, un dispositif à contour hexagonal ;
- la figure 19 représente, en coupe axiale, un dispositif conforme à l'invention, dont les éléments de paroi contiennent un matériau de remplissage ;
- la figure 20 est une vue de face d'un dispositif dont l'élément de paroi extérieur comporte des ouvertures destinées à contrôler la déformation de la paroi.

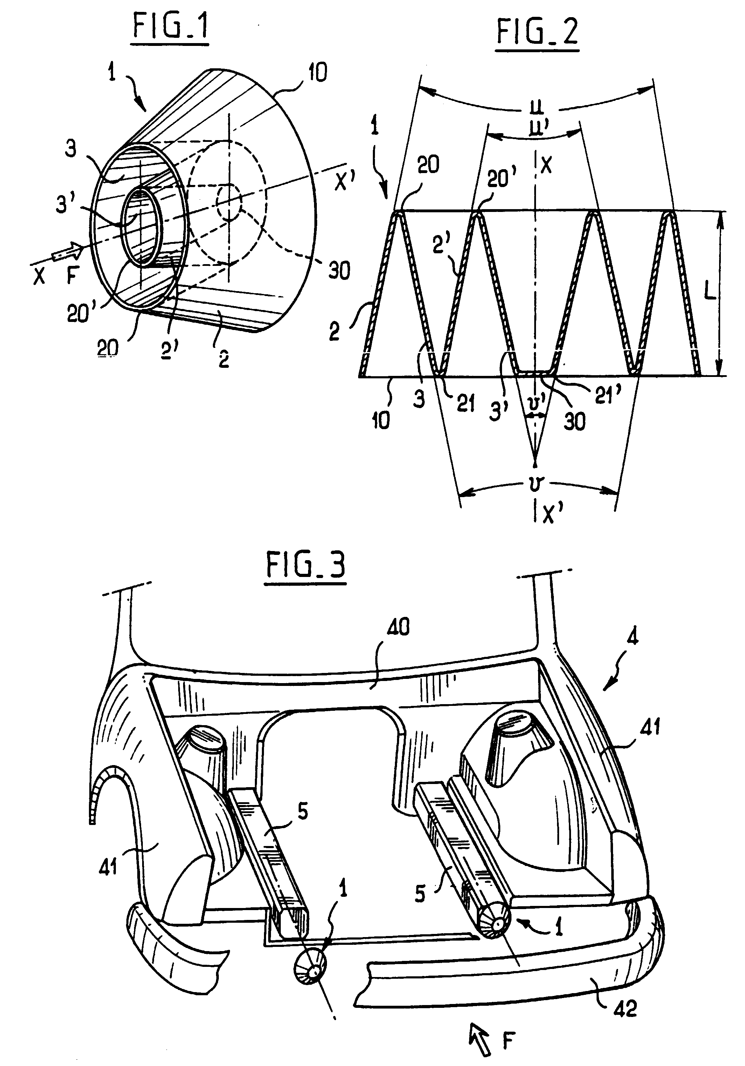

Le dispositif absorbeur de choc 1 représenté aux figures 1 et 2 est formé essentiellement de quatre éléments de paroi tronconiques 2, 3, 2' et 3', ce dernier possèdant une paroi de fond discoîde 30.

Ces éléments peuvent être constitués d'un seul tenant, à partir d'une tôle métallique emboutie.

Conformément à l'invention, ces différents éléments sont des éléments gigognes, emboîtés les uns dans les autres de manière coaxiale. L'axe commun aux éléments de paroi est désigné XX'.

Deux éléments adjacents sont placés tête-bêche, de telle façon que le bord d'extrémité non évasée (c'est-à-dire de plus petit diamètre) d'un élément se trouve en appui contre le bord d'extrémité évasée (c'est-à-dire de plus grand diamètre) de l'élément adjacent.

Par l'expression "se trouve en appui" on entendra dans la présente description et dans les revendications non seulement le fait que les deux bords sont en contact l'un avec l'autre, mais également le fait qu'ils sont fixés l'un à l'autre ou qu'ils forment une seule et même pièce comme c'est le cas dans le mode de réalisation des figures 1 et 2.

Dans ce mode de réalisation, l'élément de paroi extérieur 2 possède un bord d'extrémité non évasée 20 qui correspond au bord de l'extrémité évasée de l'élément suivant 3 ; le bord non évasé de ce dernier, référencé 21, correspond au bord d'extrémité évasée de l'élément suivant 2'. Enfin, le bord d'extrémité non évasée de l'élément 2', référencé 20', correspond au bord d'extrémité évasée de l'élément intérieur 3'.

Les bords circulaires 20, 21 et 20' sont en fait des replis réalisés dans la tôle emboutie.

Dans ce mode de réalisation, les quatre éléments tronconiques 2, 3, 2' et 3' ont la même longueur L, c'est-à-dire la même dimension en direction axiale. Il en résulte que les bords 20 et 20' d'une part ainsi que le bord 21 et le fond 30 se trouvent situés dans des plans perpendiculaires à l'axe XX', distants de L. On a désigné par les références u et u' les angles au sommet des éléments de paroi 2 et respectivement 2', qui convergent tous deux dans le même sens. De manière analogue, on a référencé v et v' les angles au sommet des éléments de paroi 3 et respectivement 3', lesquels convergent dans le sens opposé.

De préférence, ces quatre angles sont égaux u = u' = v = v'.

Dans le cas d'une application automobile, la valeur absolue de ces angles est avantageusement comprise entre 10 et 60 degrés, de préférence entre 10 et 30 degrés.

On ne sortirait pas, bien entendu, du cadre de l'invention si on prévoyait des angles différents pour certains des éléments de paroi.

La partie avant de la caisse d'un véhicule recevant ce dispositif est référencée 4 à la figure 3. Le tablier est référencé 40 tandis que les ailes sont désignées par la reférence 41.

Au voisinage du fond de cette partie avant, normalement destinée à recevoir le moteur, sont montés une paire de longerons 5, ou brancards, disposés longitudinalement, symétriquement de chaque côté de l'axe longitudinal médian du véhicule.

Le pare-chocs avant 42 est fixé aux brancards 5.

Avantageusement, les dispositifs absorbeurs de choc 1 selon l'invention sont montés à l'extrémité avant des brancards 5, entre le pare-chocs et les brancards. La fixation peut se faire par tout moyen approprié tel que soudage, vissage, rivetage, collage, etc.

Les dispositifs 1 sont montés de telle manière que leur axe de révolution XX' soit parallèle à l'axe longitudinal du véhicule.

De préférence, ils sont placés de telle manière que l'élément de paroi extérieur (et apparent) 2 diverge dans le même sens que le choc envisagé, symbolisé sur les figures 1 et 3 par la flèche F, et orienté de l'avant vers l'arrière du véhicule.

A titre indicatif, pour une application automobile sur véhicule de tourisme, le dimensionnement envisageable d'un tel dispositif est le suivant :
- l'angle au sommet est compris entre 10 et 30 degrés ;
- la tôle a une épaisseur comprise entre 0,6 mm et 1 mm ;
- le dispositif s'inscrit dans un volume maximal de 150 mm x 200 mm (diamètre de la base du grand cône x par la hauteur).

Lors d'une collision, l'énergie du choc va être absorbée par la déformation globale de l'ensemble des éléments de paroi.

A cet égard, il convient de noter la faible sensibilité que présente le dispositif au déversement latéral ou à un pliage prématuré d'ensemble, notamment lors d'une collision qui n'est pas purement axiale, mais possède une composante transversale. Cette stabilité est due à la forme tronconique et aux multiples parois internes qui, par l'alternance de leur positionnement, procurent nécessairement une résistance dans une direction avoisinant celle de la force d'impact.

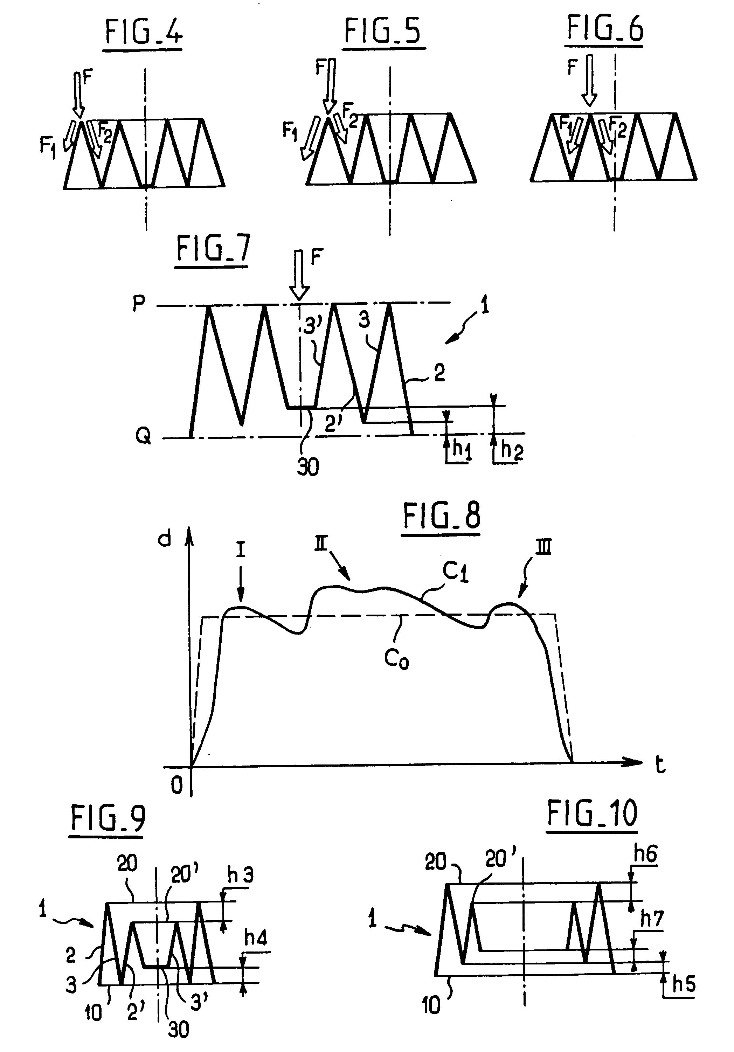

Ce phénomène est mis en évidence sur les schémas qui font l'objet des figures 4 à 6.

Que la force d'impact F ait une composante transversale dans un sens (vers l'intérieur : figure 4), dans l'autre sens (vers l'extérieur : figure 5) ou soit parfaitement axiale (figure 6), cette force va se décomposer en des forces élémentaires F1 et F2 qui vont tendre à comprimer chacune des parois du dispositif.

Il convient de noter également que la section courante circulaire de chacun des éléments de paroi est la forme théoriquement idéale pour absorber un maximum d'énergie.

Lors d'une mise en compression, la présence de points d'appui répartis dans une même section (centre et périphérie) assure une bonne homogénéité de l'introduction des efforts, favorisant la formation des plis souhaités, alors que cette formation serait contrariée dans des éléments d'absorption qui seraient basés sur la déformation d'un corps creux à paroi simple par des surcontraintes localisées (dues par exemple à des défauts géométriques mineurs introduits lors de la fabrication des pièces). Grâce à cette forme, on obtient au niveau de chaque plan transversal une bonne répartition surfacique des contraintes et donc une bonne tolérance aux défauts géométriques.

Par ailleurs, il est important de signaler que la section courante reste constante par le fait que les conicités sont alternées dans un sens ou dans l'autre. En effet, le gain de section apporté par un cône qui s'évase est annulé par la perte de section subie par un cône qui se rétrécit. Ceci résulte du fait que le gradient de section d'un cône suivant son axe n'est pas fonction de son rayon, mais de l'épaisseur de la paroi et de l'angle du cône. Il n'y aura donc pas, au cours de l'écrasement, un accroissement de section qui pourrait constituer un point dur et conduire à un blocage de l'écrasement.

Cette remarque est vraie, bien entendu, pour un nombre pair de cônes ayant même angle au sommet, comme c'est le cas dans le mode de réalisation qui vient d'être décrit. En cas de nombre impair, la loi d'évolution de l'ensemble des cônes est celle définie par un seul cône, à savoir le cône central.

Dans la variante de la figure 7, les éléments de paroi tronconiques n'ont pas tous la même longueur.

Les éléments 3 et 2' ont la même longueur ; celle-ci est inférieure à la longueur de l'élément extérieur 2, mais supérieure à la longueur de l'élément intérieur 3'.

On a désigné par les références P et Q les plans d'extrémité du dispositif, le plan P correspondant à l'extrémité de plus petit diamètre de l'élément extérieur 2, et recevant le choc F.

On comprend donc qu'au départ c'est seulement la partie extérieure 2 qui va se trouver sollicitée par le choc. Cet élément va donc se déformer, jusqu'à ce que le jeu h1 correspondant à la différence entre l'écartement des plans P et Q et la longueur des parties 3 et 2' soit comblé. Les éléments 2' et 3 vont alors également se déformer. Enfin, lorsque le jeu h2 qui correspond à la différence entre l'écartement mutuel des plans P et Q et la longueur de la partie centrale 3' est à son tour comblé, l'élément 3' va également se déformer. On obtient donc par cette configuration un décalage dans le temps de l'apparition des résistances apportées par chaque tronc de cône au cours de l'écrasement, ce qui permet d'obtenir un niveau d'absorption au choc pratiquement constant, comme cela est illustré par la courbe C1 représentée à la figure 8.

Sur cette figure l'axe ot est l'axe des temps tandis que l'axe od correspond à la décélération du véhicule.

On constate que cette courbe C1 présente trois ondulations successives I, II et III qui correspondent aux déformations successives de l'élément 2, des éléments 2'-3 et enfin de l'élément 3'. Elle a une allure voisine de la courbe idéale C0 qui représente une décélération constante en fonction du temps (courbe représentée en traits interrompus).

Dans les variantes représentées aux figures 9 à 12 sont prévues différentes configurations dimensionnelle qui assurent également un écrasement progressif des différents éléments de paroi.

La forme de réalisation du dispositif représenté à la figure 9 possède des éléments extérieurs 2 et 3 qui ont la même longueur, tandis que l'élément central 3' a une longueur plus faible, et l'élément 2' une longueur intermédiaire.

Il existe donc un premier jeu h3 entre les bords 20 et 20' et un second jeu h4 entre le fond 30 et le bord 10 de l'élément extérieur.

Dans la forme de réalisation de la figure 10, les quatre éléments de paroi ont des longueurs décroissantes de l'extérieur vers l'intérieur. Il en résulte trois jeux successifs, désignés h5, h6 et h7.

Selon la figure Il, seul l'élément de paroi intérieur a une longueur axiale inférieure à celle des autres éléments. Il en résulte un jeu h8 entre le bord libre de plus petit diamètre de cet élément intérieur 3' et le bord 10 de plus grand diamètre de l'élément extérieur 2.

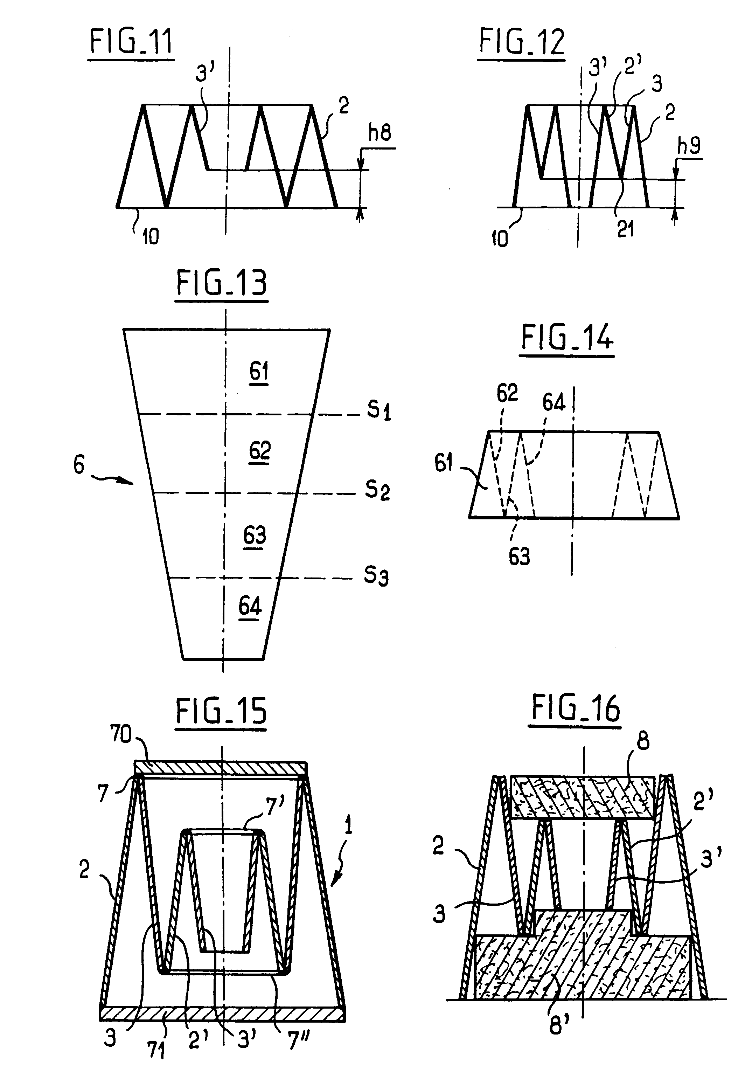

Selon la forme de réalisation de la figure 12, les éléments extérieur 2 et intérieur 3' ont la même longueur, tandis que les éléments intermédiaires 3 et 2' ont une longueur plus petite, ce qui donne un jeu axial h9 entre le bord 21 et le bord 10.

Bien entendu, les courbes de décélération en fonction du temps obtenues avec ces différentes configurations auront des allures différentes, plus ou moins proches de la courbe idéale (décélération constante en fonction du temps).

Les figures 13 et 14 illustrent la manière dont on peut fabriquer un dispositif selon l'invention à partir d'un tube tronconique 6. Ce dernier est sectionné transversalement à son axe de révolution, par exemple par sciage.

Dans l'exemple représenté à la figure 13, on a prévu trois plans de coupe S1, S2 et S3 équidistants entre eux et par rapport à l'extrémité du tube, permettant de découper le tube 6 en quatre tronçons 61, 62, 63 et 64 de même longueur.

Les tronçons sont ensuite emboîtés tête-bêche, de telle manière que le bord de plus petit diamètre d'un tronçon vienne s'appliquer contre le bord de plus grand diamètre du tronçon voisin.

On obtient ainsi un dispositif similaire à celui des figures 1 et 2, à la différence que les différents tronçons emboîtés sont indépendants, c'est-à-dire non fixés les uns aux autres.

Dans un mode de réalisation possible, on peut procéder à la fixation mutuelle des éléments, comme on le verra plus loin en référence à la figure 15. Dans un autre mode de réalisation, on peut les laisser disjoints ; dans ce cas il peut être utile de prévoir des cales qui maintiennent les différents éléments dans les positions relatives souhaitées, chaque cale devant être choisie en matériau de faible résistance (par exemple en mousse de polyuréthane) de façon à ne pas perturber le fonctionnement de l'ensemble au cours de l'écrasement.

II va de soi qu'il est possible de découper des tubes tronconiques 6 en tronçons de longueurs différentes, notamment pour obtenir des configurations telles que celles décrites aux figures 7, 9, 10, 11 ou 12.

Ainsi, dans le mode de réalisation représenté à la figure 15, on a affaire à des éléments de longueurs différentes, cette configuration correspondant à celle de la figure 10. Les différents éléments de paroi sont reliés les uns aux autres par des cordons de soudure référencés 7, 7' et 7'', de sorte que l'ensemble est rigide. Par ailleurs, les extrémités du dispositif sont obturées par des plaques discoîdes d'extrémité 70, 71. Ces plaques sont soudées aux bords d'extrémité de l'élément extérieur 2. La liaison des éléments de paroi entre eux et la fixation des plaques de fermeture pourrait naturellement se faire par des moyens autres que le soudage, notamment par collage.

En principe, la fixation des éléments les uns aux autres n'est pas nécessaire lorsque des plaques de fermeture sont prévues, car leur présence assure le blocage mutuel des éléments. Pour éviter des bruits parasites à l'utilisation, il suffit de mettre en place des cordons de mastic sur les bords de chaque élément avant fermeture de l'ensemble.

Dans la forme de réalisation de la figure 16, les différents éléments de paroi sont simplement emboîtés les uns dans les autres sans fixation mutuelle.

Cependant, il est prévu à l'intérieur du dispositif des cales en forme de bouchons 8, 8', qui assurent la retenue des éléments dans leur position relative adéquate. Dans l'exemple représenté, la cale supérieure 8 est cylindrique tandis que la cale inférieure 8' a une forme cylindrique étagée, pour tenir compte des réductions de longueur des éléments intérieurs.

Comme déjà dit plus haut, le tronc de cône est la forme préférée car la section circulaire est la meilleure pour absorber un maximum d'énergie. Cependant d'autres formes sont possibles.

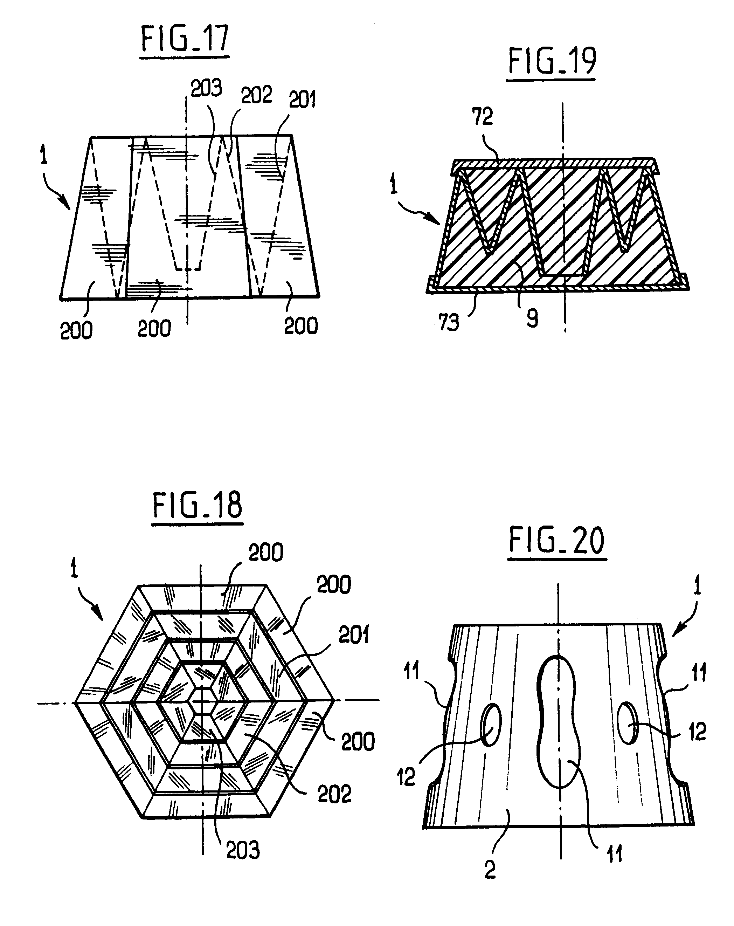

Ainsi, dans le mode de réalisation des figures 17 et 18, les différents éléments de paroi ont une section polygonale, en l'occurence hexagonale. Chaque élément a donc la forme d'une pyramide à six faces. Ces éléments sont référencés 200, 201, 202 et 203 lorsqu'on considère les éléments de paroi de l'extérieur vers l'intérieur.

Dans le mode de réalisation de la figure 19, l'ensemble des éléments de paroi est noyé à l'intérieur d'une masse de remplissage 9, par exemple en matière plastique facilement déformable. Il est prévu des plaques de fermeture 72, 73. Dans une variante, un matériau de remplissage pourrait être prévu à l'intérieur d'un seul ou de certains seulement des éléments de paroi.

La figure 20 représente un élément de paroi, en l'occurence l'élément extérieur 2, qui est pourvu de moyens de contrôle de la déformation de la paroi. Il s'agit en l'occurence d'un ensemble d'ouvertures 11, 12 qui traversent la paroi.

Dans l'exemple représenté, il est prévu une série de quatre ouvertures Il ayant la forme générale d'un "8" entre lesquelles s'intercalent des ouvertures circulaires 12.

En jouant sur la forme, le nombre et l'emplacement des ouvertures, il est possible d'adapter la déformabilité de la paroi aux besoins.

D'autres moyens de contrôle de la paroi peuvent naturellement être prévus, par exemple la présence de moulures, de rainures ou des variations d'épaisseur de paroi.

On notera que le dispositif proposé a une très bonne tenue flexionnelle, ce qui le rend apte à servir de pièce intermédiaire de structure, pour accrocher un pare-chocs par exemple.

Les matériaux pouvant être utilisés pour la fabrication de ce genre de dispositifs sont très variés. La nature du matériau sera naturellement adaptée aux contraintes auxquelles le dispositif doit être soumis en cours d'usage. Comme matériaux utilisables on peut notamment citer le métal, la matière plastique et les matériaux composites (par exemple polyester armé de fibres).

## Revendications

1. Dispositif absorbeur de choc comprenant plusieurs éléments de paroi tubulaires (2, 3, 2', 3') qui s'évasent selon leur direction axiale et sont emboîtés les uns dans les autres, caractérisé par le fait que lesdits éléments sont placés tête-bêche de telle façon que le bord d'extrémité non évasée d'un élément se trouve en appui contre le bord d'extrémité évasée de l'élément adjacent, l'axe commun aux éléments de paroi tubulaires (x,x') formant l'axe de révolution du dispositif et étant orienté sensiblement suivant la direction du choc envisagé (F), de sorte que lesdits éléments de paroi travaillent à la compression au cours de leur écrasement.

2. Dispositif selon la revendication 1, caractérisé par le fait que l'élément extérieur (2) s'évase dans le sens du choc envisagé (F).

3. Dispositif selon l'une des revendications 1 ou 2, caractérisé par le fait que l'empilement des éléments de paroi est pourvu à l'une au moins de ses extrémités d'une plaque de fermeture (70, 71).

4. Dispositif-selon l'une des revendications 1 à 3, caractérisé par le fait que l'ensemble des éléments de paroi constitue une pièce monobloc, obtenue par exemple par emboutissage d'une tôle.

5. Dispositif selon l'une des revendications 1 à 3, caractérisé par le fait que les différents éléments de paroi sont fixés les uns aux autres au niveau de leurs bords en appui, par collage ou soudage.

6. Dispositif selon l'une des revendications 1 à 5, caractérisé par le fait que l'ensemble des éléments de paroi ont la même longueur.

7. Dispositif selon l'une des revendications 1 à 5, caractérisé par le fait que tous les éléments de paroi n'ont pas la même longueur.

8. Dispositif selon la revendication 7, caractérisé par le fait qu'il est pourvu de cales (8, 8') de maintien de l'empilement.

9. Dispositif selon l'une des revendications 1 à 8, caractérisé par le fait qu'il contient un matériau de remplissage (9).

10. Dispositif selon l'une des revendications 1 à 9, caractérisé par le fait que l'un au moins des éléments de paroi comporte des moyens de contrôle de sa déformation, par exemple des ouvertures (11, 12).

11. Dispositif selon l'une des revendications 1 à 10, caractérisé par le fait que les éléments de paroi sont tronconiques.

12. Dispositif selon l'une des revendications 1 à 11, caractérisé par le fait que l'ensemble des éléments de paroi ont la même conicité.

13. Dispositif selon la revendication 11 ou 12 destiné à une application automobile, caractérisé par le fait que l'angle au sommet (u, u', v, v') des éléments de paroi est compris entre 10 et 60 degrés, de préférence entre 10 et 30 degrés.

14. Dispositif selon la revendication 12, caractérisé par le fait que l'ensemble des éléments de paroi sont obtenus par découpage d'un tube tronconique unique.

## Patentansprüche

1. Stoßdämpfervorrichtung mit mehreren rohrförmigen Wandelementen (2, 3, 2', 3'), die sich in ihrer axialen Richtung erweitern und ineinandergeschachtelt sind, dadurch gekennzeichnet, daß die genannten Elemente derart entgegengesetzt angeordnet sind, daß der nichterweiterte Endrand eines Elements sich in Anlage gegen den erweiterten Endrand des benachbarten Elements befindet, wobei die den rohrförmigen Wandelementen gemeinsame Achse (X, X') eine Rotationsachse der Vorrichtung bildet und im wesentlichen in Richtung des erwarteten Stoßes (F) derart ausgerichtet ist, daß die genannten Wandelemente im Verlauf ihrer Zusammendrückung auf Druck belastet werden.

2. Vorrichtung nach Anspruch 1, dadurch gekennzeichnet, daß sich das äußere Element (2) in Richtung des erwarteten Stosses (F) erweitert.

3. Vorrichtung nach einem der Ansprüche 1 oder 2, dadurch gekennzeichnet, daß der Stapel der Wandelemente mindestens an einem seiner Enden mit einer Abschlußplatte (70, 71) versehen ist.

4. Vorrichtung nach einem der Ansprüche 1 bis 3, dadurch gekennzeichnet, daß die Gesamtheit von Wandelementen ein einstückiges Teil bildet, das beispielsweise durch Ziehen eines Blechs erhalten wird.

5. Vorrichtung nach einem der Ansprüche 1 bis 3, dadurch gekennzeichnet, daß die verschiedenen Wandelemente auf der Höhe ihrer aneinanderliegenden Ränder durch Verklebung oder Verschweißung aneinander befestigt sind.

6. Vorrichtung nach einem der Ansprüche 1 bis 5, dadurch gekennzeichnet, daß die Gesamtheit von Wandelementen dieselbe Länge aufweisen.

7. Vorrichtung nach einem der Ansprüche 1 bis 5, dadurch gekennzeichnet, daß nicht alle Wandelemente dieselbe Länge aufweisen.

8. Vorrichtung nach Anspruch 7, dadurch gekennzeichnet, daß sie mit Stapel-Halteklötzen (8, 8') versehen ist.

9. Vorrichtung nach einem der Ansprüche 1 bis 8, dadurch gekennzeichnet, daß sie ein Füllmaterial (9) enthält.

10. Vorrichtung nach einem der Ansprüche 1 bis 9, dadurch gekennzeichnet, daß mindestens eines der Wandelemente Mittel zum Steuern seiner Verformung aufweist, beispielsweise Öffnungen (11, 12).

11. Vorrichtung nach einem der Ansprüche 1 bis 10, dadurch gekennzeichnet, daß die Wandelemente kegelstumpfförmig sind.

12. Vorrichtung nach einem der Ansprüche 1 bis 11, dadurch gekennzeichnet, daß die Gesamtheit der Wandelemente dieselbe Konizität aufweist.

13. Vorichtung nach Anspruch 11 oder 12, bestimmt für die Anwendung bei einem Kraftfahrzeug, dadurch gekennzeichnet, daß der Scheitelwinkel (u, u', v, v') der Wandelemente zwischen 10 und 60°, vorzugsweise zwischen 10 und 30°, liegt.

14. Vorrichtung nach Anspruch 12, dadurch gekennzeichnet, daß die Gesamtheit der Wandelemente durch Abschneiden eines einzigen, kegelstumpfförmigen Rohres erhalten wird.

## Claims

1. Shock absorber device comprising several tubular wall members (2, 3, 2', 3') flaring in their axial direction and nesting one inside the other, characterised by the fact that said members are placed top to bottom such that the edge of the non-flared end of one member is resting against the edge of the flared end of the adjacent member, the common axis of the tubular wall members (X, X') forming the axis of rotation of the device and being oriented substantially in the direction of the envisaged shock (F), such that said wall members work in compression while they are being crushed.

2. Device according to Claim 1, characterised by the fact that the outer member (2) flares in the direction of the envisaged shock (F).

3. Device according to one of Claims 1 or 2, characterised by the fact that the stack of wall members is provided at at least one of its ends with a closing plate (70, 71).

4. Device according to one of Claims 1 to 3, characterised by the fact that the assembly of wall members constitutes a one-piece unit, produced for example by swaging sheet metal.

5. Device according to one of Claims 1 to 3, characterised by the fact that the various wall members are fixed together at their adjacent edges, by bonding or welding.

6. Device according to one of Claims 1 to 5, characterised by the fact that the assembly of wall members are of the same length.

7. Device according to one of Claims 1 to 5, characterised by the fact that all the wall members are not of the same length.

8. Device according to Claim 7, characterised by the fact that it is provided with wedges (8, 8') for holding the stack.

9. Device according to one of Claims 1 to 8, characterised by the fact that it contains filling material (9).

10. Device according to one of Claims 1 to 9, characterised by the fact that at least one of the wall members has means for monitoring its deformation, for example, openings (11, 12).

11. Device according to one of Claims 1 to 10, characterised by the fact that the wall members are in the shape of a truncated cone.

12. Device according to one of Claims 1 to 11, characterised by the fact that the assembly of wall members have the same conicity.

13. Device according to Claim 11 or 12 intended for an automotive application, characterised by the fact that the angle at the vertex (u, u', v, v') of the wall members is comprised between 10 and 60 degrees, preferably between 10 and 30 degrees.

14. Device according to Claim 12, characterised by the fact that the assembly of wall members are produced by cutting up a single tube in the shape of a truncated cone.
